(19) Europäisches Patentamt
European Patent Office
Office européen des brevets

(11) EP 2 738 928 A1

(12) EUROPEAN PATENT APPLICATION
published in accordance with Art. 153(4) EPC

(43) Date of publication:
04.06.2014 Bulletin 2014/23

(51) Int Cl.:
H02M 3/155 (2006.01)

(21) Application number: 12835807.4

(22) Date of filing: 09.02.2012

(86) International application number:
PCT/JP2012/052945

(87) International publication number:
WO 2013/046739 (04.04.2013 Gazette 2013/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 29.09.2011 JP 2011214232

(71) Applicant: Fuji Electric Co., Ltd.
Kawasaki-shi
Kanagawa 210-9530 (JP)

(72) Inventors:
• ODAKA Akihiro
Kawasaki-city
Kanagawa 210-9530 (JP)
• TOBA Akio
Kawasaki-city
Kanagawa 210-9530 (JP)
• GEKINOZU Masakazu
Kawasaki-city
Kanagawa 210-9530 (JP)

(74) Representative: MERH-IP
Matias Erny Reichl Hoffmann
Paul-Heyse-Strasse 29
80336 München (DE)

(54) POWER CONVERTER

(57)     A power conversion device includes a semiconductor switch series circuit configured by connecting semiconductor switches $S_p$ and $S_n$ in series; a capacitor series circuit configured by connecting capacitors $C_{dp}$ and $C_{dn}$ in series; a reactor L connected between the series connection point of the semiconductor switches $S_p$ and $S_n$ and the series connection point of the capacitors $C_{dp}$ and $C_{dn}$; and a direct current power source $V_s$ connected in parallel to the capacitor $C_{dn}$ or $C_{dp}$. The semiconductor switch series circuit and capacitor series circuit are connected in parallel, a load Load is connected between the parallel connection points of the two circuits, and the semiconductor switches $S_p$ and $S_n$ are turned on and off, thereby raising a direct current power source voltage and supplying it to the load Load. By so doing, it is possible to reduce the size and cost of the entire device.

Fig.1

**Description**

Technical Field

The present invention relates to a power conversion device which converts direct current power source voltage to a desired magnitude of direct current voltage by turning on and off semiconductor switches, and exchanges direct current power between a direct current power source and a load.

Background Art

Fig. 4 is a circuit diagram of a power supply device described in PTL 1, which is commonly called a DC-DC (Direct Current - Direct Current) converter.

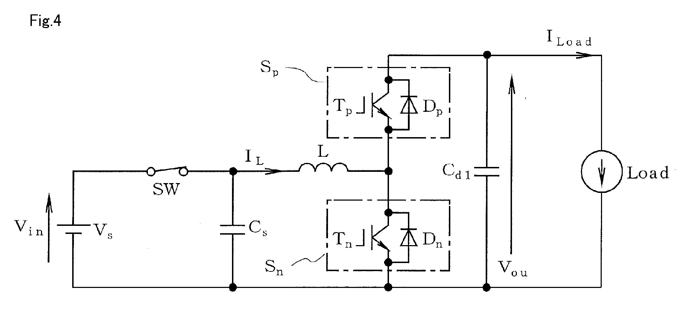

In Fig. 4, $V_s$ is a direct current power source such as a secondary battery, SW is a main switch, $C_s$ and $C_{d1}$ are smoothing capacitors, L is a reactor, $S_p$ and $S_n$ are semiconductor switches, $T_p$ and $T_n$ are power semiconductor switching elements such as IGBTs (Insulated Gate Bipolar Transistors), $D_p$ and $D_n$ are free wheeling diodes, and Load is a load represented as a current source.

In this heretofore known technology, accumulation and release of energy into and from the reactor L is repeated by alternately turning on and off the switching elements $T_p$ and $T_n$ at an appropriate time ratio, thus raising a power source voltage $V_{in}$ to a voltage $V_{out}$ higher than the power source voltage $V_{in}$ and supplying the voltage $V_{out}$ to the load Load.

When a current $I_{Load}$ flowing through the load Load flows in a direction opposite to the direction shown in Fig. 4, the switching elements $T_p$ and $T_n$ are turned on and off at an appropriate time ratio so that the voltage $V_{out}$ applied to the load Load is of reverse polarity. In this case, as the current $I_L$ of the reactor L flows in a direction opposite to the direction shown in Fig. 4, the power of the load Load is regenerated by the direct current power source $V_s$. In this way, with the heretofore known technology of Fig. 4, it is possible to realize a bidirectional power flow.

Herein, pulsating components are contained in the current $I_L$ flowing through the reactor L by turning on and off the switching elements $T_p$ and $T_n$. However, as the pulsating components are suppressed by the current smoothing effect of the capacitor $C_s$, a current with the pulsating components removed therefrom flows through the direct current power source $V_s$.

In general, when a current containing many pulsating components flows through a secondary battery, it reduces the life span of the secondary battery. Consequently, considering that the direct current power source $V_s$ is configured of a secondary battery, it is possible, by providing the capacitor $C_s$, as shown in Fig. 4, to suppress the pulsating components of the current flowing through the secondary battery, thus lengthening the life span of the secondary battery.

Meanwhile, in Fig. 4, the main switch SW, being for electrically disconnecting the direct current power source $V_s$ from a power conversion circuit formed of the semiconductor switches $S_p$ and $S_n$ and the like, acts so as to interrupt power source supply when an anomaly occurs in the power conversion circuit or load Load. Herein, as the main switch SW has to consume inductive energy accumulated in the reactor L, the tolerance of inductance which can be connected to the main switch SW is normally prescribed in advance for the main switch SW.

In this case, when an inductance exceeding the heretofore mentioned tolerance is connected to the switch SW, there arises a problem of causing a reduction in the life span of the switch SW, or the like. In order to respond to this problem too, however, the capacitor $C_s$ absorbs the energy accumulated in the reactor L, and it is thereby possible to prevent a reduction in the life span of the switch SW.

Citation List

Patent Literature

PTL 1: JP-A-2010-166646 ([0016] to [0024], Figs. 1 and 2, and the like)

Summary of Invention

Technical Problem

As heretofore described, the capacitor $C_s$ provided on the input side of the power conversion circuit has the function of suppressing pulsating components of the power source current and absorbing the energy accumulated in the reactor L, thereby yields the operational advantage of lengthening the life span of the direct current power source $V_s$ and switch SW.

However, the capacitor $C_s$ and the high voltage capacitor $C_{d1}$ in charge of the output voltage $V_{out}$ cause an increase in size and cost, and it has been required to solve this problem.

Therefore, a problem to be solved by the invention lies in providing a power conversion device enabling a reduction in the size and cost of the entire device.

Solution to Problem

In order to solve the heretofore described problem, in an aspect of the invention according to claim 1, a power conversion device includes a semiconductor switch series circuit configured by connecting first and second semiconductor switches in series; a capacitor series circuit configured by connecting first and second capacitors in series; a reactor connected between the series connection point of the first and second semiconductor switches and the series connection point of the first and second capacitors; and a direct current power source connected in parallel to the first capacitor or second capacitor.

Further, the device is such that the semiconductor switch series circuit and capacitor series circuit are connected in parallel, and a load is connected between the parallel connection points of the two circuits, and that direct current power is exchanged between the direct current power source and load by turning on and off the first and second semiconductor switches.

In an aspect of the invention according to claim 2, the power conversion device according to claim 1 includes voltage detection means which detect the respective voltages of the first and second capacitors; means which generates a voltage command value of the other capacitor from a difference between an output voltage command value and a voltage detection value of one capacitor connected in parallel to the direct current power source; first regulation means which generates a command value for causing a voltage detection value of the other capacitor to coincide with the voltage command value of the other capacitor; and means which regulates the voltage of the other capacitor by turning on and off the first and second semiconductor switches based on the command value output from the first regulation means.

In an aspect of the invention according to claim 3, the power conversion device according to claim 2 includes current detection means which detects a current flowing through the reactor; second regulation means which generates a command value for causing a current detection value detected by the current detection means to coincide with a current command value output from the first regulation means; and means which regulates the voltage of the other capacitor by turning on and off the first and second semiconductor switches based on the command value output from the second regulation means.

Advantageous Effects of Invention

The power conversion device of the invention is of a circuit configuration wherein the voltage of a capacitor, of a capacitor series circuit, to which a direct current power source is not connected in parallel is regulated by turning on and off semiconductor switches, thus controlling direct current output voltage to a predetermined value. Because of this, it is possible to use a low voltage capacitor as the heretofore mentioned capacitor, thus contributing to a reduction in the size and cost of the entire device.

Brief Description of Drawings

[Fig. 1] Fig. 1 is a circuit diagram showing a first embodiment of the invention.
[Fig. 2] Fig. 2 is a circuit diagram showing a second embodiment of the invention.

[Fig. 3] Fig. 3 is a circuit diagram showing a third embodiment of the invention.
[Fig. 4] Fig. 4 is a circuit diagram showing a heretofore known technology.

Description of Embodiments

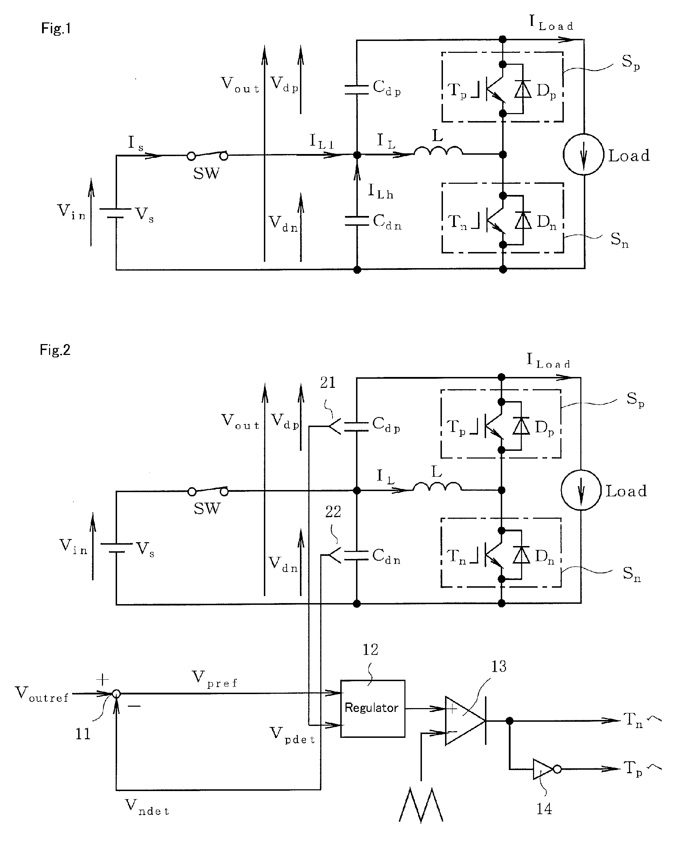

Hereafter, a description will be given, along the drawings, of embodiments of the invention.
Firstly, Fig. 1 is a circuit diagram showing a first embodiment of the invention corresponding to claim 1, wherein components having the same functions as in Fig. 4 are given the same reference signs and a description will be omitted, and hereafter, a description will be given centering on portions different from those of Fig. 4.
In Fig. 1, a capacitor series circuit wherein first and second capacitors $C_{dp}$ and $C_{dn}$ are connected in series and a semiconductor switch series circuit wherein first and second semiconductor switches $S_p$ and $S_n$ are connected in series are connected in parallel, a load Load is connected between the parallel connection points of the two circuits. Also, a reactor L is connected between the series connection point of the capacitor series circuit and the semiconductor switch series circuit, and a direct current power source $V_s$, such as a secondary battery, is connected in parallel to the second capacitor $C_{dn}$ via a main switch SW.
Although not shown, the direct current power source $V_s$ may be connected in parallel to the first capacitor $C_{dp}$, rather than the second capacitor $C_{dn}$, via the switch SW.
According to this circuit configuration, it is possible to raise and lower a voltage $V_{dp}$ of the capacitor $C_{dp}$ with respect to a power source voltage $V_{in}$ by turning on and off switching elements $T_p$ and $T_n$. Herein, a voltage applied to the load Load, that is, an output voltage $V_{out}$ in the invention is the sum of the voltage $V_{dp}$ of the capacitor $C_{dp}$ and a voltage $V_{dn}$ of the capacitor $C_{dn}$, and the voltage $V_{dn}$ of the capacitor $C_{dn}$ is equal to the power source voltage $V_{in}$.
Because of this, it is possible to supply a voltage equal to or higher than the power source voltage $V_{in}$ to the load Load as the output voltage $V_{out}$ by regulating the voltage $V_{dp}$ of the capacitor $C_{dp}$ by turning on and off the switching elements $T_p$ and $T_n$.
Herein, when the on time ratio of the switching element $T_n$ is taken to be $\alpha$, the relationship between the voltage $V_{dp}$ of the capacitor $C_{dp}$ and the power source voltage $V_{in}$ can be expressed by Math. 1. Consequently, it is possible to regulate the voltage $V_{dp}$ of the capacitor $C_{dp}$ and thus the output voltage $V_{out}$ to a predetermined value by controlling the on time ratio $\alpha$, in other words, the turning on and off of the switching elements $T_p$ and $T_n$.

[Math. 1]

$$V_{dp} = \frac{\alpha}{1-\alpha} V_{in}$$

Now, in this embodiment, a current $I_L$ flowing through the reactor L is the sum of a current $I_{L1}$ flowing through the direct current power source $V_s$ and a current $I_{Lh}$ flowing through the capacitor $C_{dn}$. When taking into account the impedance of the wiring between the direct current power source $V_s$ and capacitor $C_{dn}$ or the internal impedance of the power source $V_s$ (these impedances are not shown), pulsating components contained in the current $I_L$ flowing through the reactor L flow through the capacitor $C_{dn}$ as the $I_{Lh}$, and only average components of the current $I_L$ flow through the direct current power source $V_s$ as an $I_{L1}$.

It is also conceivable from a different angle that this is because a kind of filter for suppressing the pulsating components is formed by the wiring impedance or the internal impedance of the power source $V_s$ and the capacitor $C_{dn}$.

Hereafter, a description will be given of operational advantages of this embodiment while comparing them with those of the heretofore known technology of Fig. 4.

Firstly, consideration will be given, focusing on capacitors which suppress the pulsating components of the current $I_L$ flowing through the reactor L. In Figs. 1 and 4, when filtering ability determined by capacitance is taken to be the same, the capacitor $C_{dn}$ in Fig. 1 and the capacitor $C_s$ in Fig. 4 are equal in both capacitance and breakdown voltage, meaning that the replacement of the capacitor $C_s$ of Fig. 4 by the capacitor $C_{dn}$ of Fig. 1 does not directly contribute to a reduction in the size or the like of the capacitors.

Meanwhile, when comparing the functions of capacitors which exchange direct current power with the load Load, the capacitors $C_{dp}$ and $C_{dn}$ contribute to the power exchange in Fig. 1, and a capacitor $C_{d1}$ contributes to the power exchange in Fig. 4. Herein, as the capacitors $C_{dp}$ and $C_{dn}$ are connected in series, the series combined capacitance of the capacitors $C_{dp}$ and $C_{dn}$ appear to be low in Fig. 1. However, in Fig. 1, as the capacitor $C_{dn}$ is connected in parallel to the direct current power source $V_s$, it may be considered that the capacitor $C_{dn}$ has sufficiently high capacitance with regard to the power exchange with the load Load, and it is sufficient to consider only the capacitance of the capacitor $C_{dp}$ with regard to the power exchange with the load Load.

Because of this, it is possible to make the capacitance of the capacitor $C_{dp}$ of Fig. 1, which is designed in accordance with the magnitude of the power exchanged with the load, equal to that of the capacitor $C_{d1}$ of Fig. 4. Moreover, in Fig. 1, as the voltage $V_{dp}$ of the capacitor $C_{dp}$ is always equal to or lower than an output voltage $V_{out}$, as compared with the capacitor $C_{d1}$ of Fig. 4, it is possible to use a low voltage part as the capacitor $C_{dp}$. As a result, it is possible to reduce the size and cost of the capacitor $C_{dp}$ and thus of the entire device.

To rephrase the heretofore described point, in Fig. 4, the capacitor $C_{d1}$ contributes to the power exchange with the load Load, while in Fig. 1, the series circuit of the direct current power source $V_s$ and capacitor $C_{dn}$ contributes to the power exchange.

Consequently, supposing that it is intended to raise the power source voltage $V_{in}$ by $\alpha$ and supply it to the load Load, in Fig. 4, the capacitor $C_{d1}$ has to be in charge of the whole voltage $(V_{in} + \alpha)$ after being raised, while in Fig. 1, the capacitor $C_{dp}$ has only to be in charge of $\alpha$. Therefore, in Fig. 1, it is possible to use the capacitor $C_{dp}$ with breakdown voltage lower than that of the capacitor $C_{d1}$ of Fig. 4. Because of this, according to this embodiment, it is possible to reduce the size and cost of the capacitors by lowering the breakdown voltage of the capacitors.

Next, Fig. 2 is a circuit diagram showing a second embodiment of the invention corresponding to claim 2. The second embodiment is configured by adding a control block to the first embodiment of Fig. 1.

In Fig. 2, a difference between an output voltage command value $V_{outref}$ and a voltage detection value $V_{ndet}$ of the capacitor $C_{dn}$ detected by a voltage detector 22 is computed by a subtractor 11, and the difference is a voltage command value $V_{pref}$ of the capacitor $C_{dp}$. The voltage command value $V_{pref}$ and a voltage detection value $V_{pdet}$ of the capacitor $C_{dp}$ detected by a voltage detector 21 are input into a first regulator 12, and a command value for causing the voltage detection value $V_{pdet}$ to coincide with the voltage command value $V_{pref}$ is output from the regulator 12.

The command value output from the regulator 12 is input into the non-inverting input terminal of a comparator 13, and the input command value is compared with a triangular wave input into the inverting input terminal. Further, the output of the comparator 13 is a drive signal of the switching element $T_n$, and the output passing through a NOT circuit 14 is a drive signal of the switching element $T_p$.

With the heretofore described configuration, it is possible to control the voltage $V_{dp}$ of the capacitor $C_{dp}$ to a desired value, and as a result, it is possible to cause the output voltage $V_{out}$ to coincide with the output voltage command value $V_{outref}$.

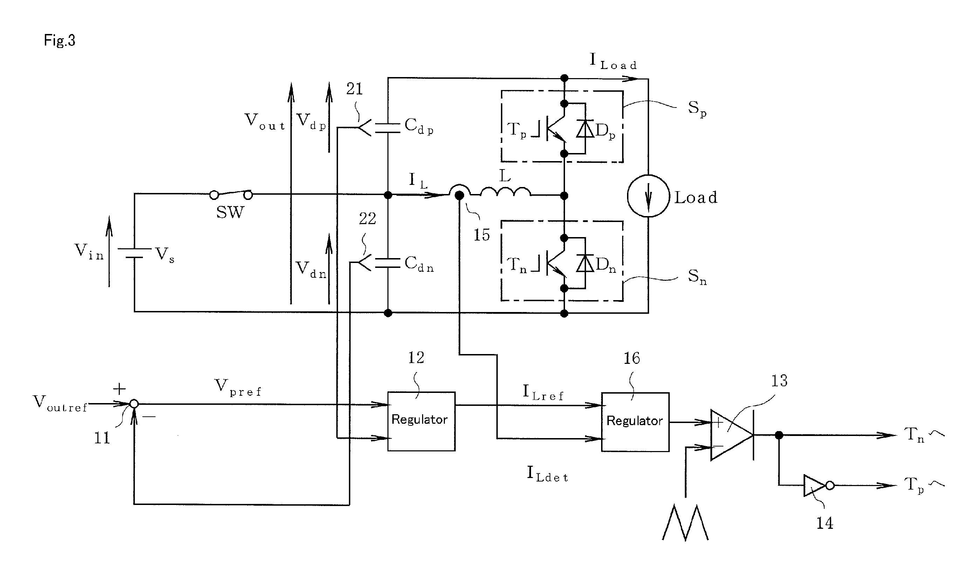

Next, Fig. 3 is a circuit diagram showing a third embodiment of the invention corresponding to claim 3.

The difference of the third embodiment from the second embodiment is that a current detector 15 which detects the current $I_L$ flowing through the reactor L is provided, and a second regulator 16 which generates a command value such that a current detection value $I_{Ldet}$ of the current $I_L$ coincides with a current command value $I_{Lref}$ output from the first regulator 12 is provided. That is, the output of the second regulator 16 into which are input the current detection value $I_{Ldet}$ and current command value $I_{Lref}$ is input into the non-inverting input terminal of the comparator 13 as a command value, and subsequently, the drive signals of the switching elements $T_n$ and $T_p$ are generated by the same operation as in the second embodiment.

According to this embodiment, the command value for causing the current detection value $I_{Ldet}$ of the reactor L to coincide with the current command value $I_{Lref}$ is generated by the second regulator 16, and the switching elements $T_p$ and $T_n$ are turned on and off based on the command value. In this case too, it is possible to control the voltage $V_{dp}$ of the capacitor $C_{dp}$ to a desired value, and thereby cause the output voltage $V_{out}$ to coincide with the output voltage command value $V_{outref}$, in the same way as in the second embodiment.

With the third embodiment, as a current flowing into the capacitor $C_{dp}$ is controlled, it is possible to improve responsiveness as compared with the second embodiment.

Industrial Applicability

The invention, being optimum for use in a case in which a reduction in size is strongly required due to limitations of installation space, can be utilized as an on-vehicle type power conversion device for an electric vehicle, hybrid vehicle, or the like.

Reference Signs List

| | |
|---|---|
| $V_s$: | Direct current power source |
| SW: | Main switch |
| $C_{dp}$, $C_{dn}$: | Capacitor |
| L: | Reactor |
| $S_p$, $S_n$: | Semiconductor switch |
| $T_p$, $T_n$: | Semiconductor switching element |
| $D_p$, $D_n$: | Free wheeling diode |
| Load: | Load |
| 11: | Subtractor |
| 12, 16: | Regulator |
| 13: | Comparator |
| 14: | NOT circuit |
| 15: | Current detector |
| 21, 22: | Voltage detector |

**Claims**

1. A power conversion device including:

a semiconductor switch series circuit configured by connecting first and second semiconductor switches in series; a capacitor series circuit configured by connecting first and second capacitors in series; a reactor connected between the series connection point of the first and second semiconductor switches and the series connection point of the first and second capacitors; and a direct current power source connected in parallel to the first capacitor or second capacitor, the device being **characterized in that** the semiconductor switch series circuit and capacitor series circuit are connected in parallel, and a load is connected between the parallel connection points of the two circuits, and that direct current power is exchanged between the direct current power source and load by turning on and off the first and second semiconductor switches.

2. The power conversion device according to claim 1, **characterized by** including:

voltage detection means which detect the respective voltages of the first and second capacitors; means which generates a voltage command value of the other capacitor from a difference between an output voltage command value and a voltage detection value of one capacitor connected in parallel to the direct current power source; first regulation means which generates a command value for causing a voltage detection value of the other capacitor to coincide with the voltage command value of the other capacitor; and means which regulates the voltage of the other capacitor by turning on and off the first and second semiconductor switches based on the command value output from the first regulation means.

3. The power conversion device according to claim 2, **characterized by** including:

current detection means which detects a current flowing through the reactor;

second regulation means which generates a command value for causing a current detection value detected by the current detection means to coincide with a current command value output from the first regulation means; and

means which regulates the voltage of the other capacitor by turning on and off the first and second semiconductor switches based on the command value output from the second regulation means.

Fig.1

Fig.2

Fig.3

Fig.4

## INTERNATIONAL SEARCH REPORT

| | International application No. |
|---|---|
| | PCT/JP2012/052945 |

A. CLASSIFICATION OF SUBJECT MATTER
*H02M3/155(2006.01)i*

According to International Patent Classification (IPC) or to both national classification and IPC

B. FIELDS SEARCHED

Minimum documentation searched (classification system followed by classification symbols)
H02M3/155

Documentation searched other than minimum documentation to the extent that such documents are included in the fields searched

| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-015895 A  (Toyota Motor Corp.),<br>15 January 2004 (15.01.2004),<br>paragraphs [0024] to [0031]; fig. 1<br>(Family: none) | 1<br>2-3 |
| A | JP 07-099783 A  (Toshiba Factory Automation<br>System Engineering Corp.),<br>11 April 1995 (11.04.1995),<br>fig. 1 to 3<br>(Family: none) | 1-3 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 April, 2012 (17.04.12) | Date of mailing of the international search report<br>24 April, 2012 (24.04.12) |
|---|---|
| Name and mailing address of the ISA/<br>Japanese Patent Office | Authorized officer |
| Facsimile No. | Telephone No. |

Form PCT/ISA/210 (second sheet) (July 2009)

EP 2 738 928 A1

**INTERNATIONAL SEARCH REPORT**

International application No.

PCT/JP2012/052945

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
      because they relate to subject matter not required to be searched by this Authority, namely:

2. ☐ Claims Nos.:
      because they relate to parts of the international application that do not comply with the prescribed requirements to such an extent that no meaningful international search can be carried out, specifically:

3. ☐ Claims Nos.:
      because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    Although the matter common to the inventions of claims 1-3 is the configuration of electric power conversion device set forth in claim 1, the search revealed that the afore-said common matter is not novel since the matter is disclosed in the document 1: JP 2004-015895 A (Toyota Motor Corp.), 15 January 2004 (15.01.2004), [0024]-[0031], fig. 1.  As a result, the above-said common matter is not a special technical feature within the meaning of PCT Rule 13.2, second sentence, since the common matter does not make a contribution over the prior art.

                                                        (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

11

EP 2 738 928 A1

**INTERNATIONAL SEARCH REPORT**

International application No.

PCT/JP2012/052945

Continuation of Box No.III of continuation of first sheet(2)


   Consequently, there is no matter common to all of the inventions of
claims 1-3 and there is no other common matter which is considered to
be a special technical feature within the meaning of PCT Rule 13.2, second
sentence, and therefore, any technical relationship within the meaning
of PCT Rule 13 cannot be found among those different inventions.  In
conclusion, it is obvious that the inventions of claims 1-3 do not comply
with the requirement of unity of invention.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2010166646 A